# EUROPÄISCHE PATENTANMELDUNG

(11) **EP 2 404 853 A1**
(43) Veröffentlichungstag der Anmeldung: **11.01.2012**
(21) Anmeldenummer: 10168826.5
(22) Anmeldetag: 08.07.2010
(51) Int. Cl.: B65H 29/16, B65H 5/02, B65H 29/60, B07C 1/10

(54) **Transportvorrichtung mit ergonomischer Zugriffsmöglichkeit**

(71) Anmelder: SIEMENS AKTIENGESELLSCHAFT, 80333 München (DE)
(72) Erfinder: Enenkel, Peter, 78462 Konstanz (DE)

(57) **Zusammenfassung**

Die Erfindung betrifft eine Vorrichtung zum Transport von flachen Gegenständen. Die Vorrichtung umfasst ein angetriebenes Endlos-Förderband (Fb). Dieses Endlos-Förderband (Fb) weist eine Vielzahl von Erhebungen (E1, E2, ...) auf. Jede Erhebung (E1, E2, ...) ist mit dem Endlos-Förderband (Fb) mechanisch verbunden. Das Förderband (Fb) ist so angeordnet, dass sich zu transportierende Gegenstände auf das Förderband (Fb) legen lassen und vom Förderband (Fb) nehmen lassen. Jede Erhebung (E1, E2, ...) ist so hoch, dass sich ein auf der Erhebung (E1, E2, ...) liegender Gegenstand (Ps) greifen lässt. Die Erhebungen (E1, E2, ...) ermöglichen es, dass zwischen einem auf mindestens einer Erhebung (E1, E2, ...) liegenden Gegenstand (Ps) und das Förderband (Fb) gefasst wird.

## Beschreibung

Transportvorrichtung mit ergonomischer Zugriffsmöglichkeit

Die Erfindung betrifft eine Vorrichtung zum Transport von flachen Gegenständen, insbesondere von flachen Postsendungen. Eine Vorrichtung mit den Merkmalen des Oberbegriffs des Anspruchs 1 ist aus DE 2138621 A bekannt.

In DE 2138621 A wird ein Fördergurt mit einem Profil auf der Tragseite beschrieben. In dieses Tragseitprofil sind mehrere Noppen eingelassen. Diese Noppen sind weich und elastisch und z. B. 7 mm hoch. Vorzugsweise verjüngen die Noppen sich konisch gesehen in einer Richtung weg von dem Förderband. Dadurch wird ermöglicht, dass der Fördergurt Gegenstände ohne Schlupf transportiert.

In EP 1819994 B1 wird eine Transportvorrichtung mit einem angetriebenen waagrechten Förderband beschrieben. Gegenstände werden auf dieses Förderband geschüttet und vom Förderband transportiert. In einer Ausgestaltung (Fig. 6, Fig. 7) besteht das Förderband aus vielen parallelen Streifen. Eine L-förmige Harke lässt sich senkrecht zum Förderband auf- und absenken und dadurch unter einen Gegenstand verbringen und mitsamt dem Gegenstand wieder aufheben.

In EP 1819994 B1 wird in Anspruch 27 vorgeschlagen, dass das Förderband Erhebungen z. B. Noppen oder Stifte aufweist. Die Transportvorrichtung umfasst in der Ausgestaltung gemäß Anspruch 22 Greif-, Aufnahme- oder Anhebemittel.

In DE 1191293 B wird eine Fördereinrichtung zum Transport von flachen Postsendungen beschrieben. Die Postsendungen liegen auf einer schrägen Ebene 1 und gleiten abwärts. Ein Förderband 2 ist um zwei Rollen herumgeführt, die senkrecht auf der schrägen Ebene 1 stehen, so dass zwischen der schrägen Ebene 1 und dem Förderband 2 ein Schlitz entsteht. Dünne Postsendungen gleiten durch diesen Schlitz hindurch. Dicke Postsendungen werden vom Förderband 2 seitlich abtransportiert. In die schräge Ebene 1 sind mehrere Schlagrollen 10 eingelassen, welche die Postsendungen anheben und dadurch durchschütteln.

In DE 10148226 C1 wird eine Vorrichtung zum Transport von flachen Gegenständen, dort Postsendungen, beschrieben. Die Gegenstände werden auf ein Förderband geschüttet, und dieses Förderband transportiert die liegenden Postsendungen eine schräge Ebene hoch.

Um einen Gegenstand, z. B. eine flache Postsendung, von diesem Förderband aus DE 10148226 C1 zu entfernen ("abzuschälen"), muss ein Werker oder Handhabungsautomat zwischen die flache Postsendung und das Förderband greifen, was schwer und zeitraubend ist und zu "Fehlgriffen" führen kann.

Der Erfindung liegt die Aufgabe zugrunde, eine Vorrichtung mit den Merkmalen des Oberbegriffs des Anspruchs 1 bereitzustellen, die flache Gegenstände mittels eines angetriebenen Förderbands zu transportieren vermag und die es ermöglicht, dass einzelne flache Gegenstände sich leicht manuell ergreifen und vom Förderband entfernen lassen.

Die Aufgabe wird durch eine Vorrichtung mit den Merkmalen des Anspruchs 1 gelöst. Vorteilhafte Ausgestaltungen sind in den Unteransprüchen angegeben.

Die lösungsgemäße Vorrichtung ist zum Transport von Gegenständen ausgestaltet.

Die Vorrichtung umfasst ein angetriebenes Endlos-Förderband, das sich in einer Ebene erstreckt. Dieses Endlos-Förderband weist eine Vielzahl von Erhebungen auf. Jede Erhebung ist mit dem Förderband mechanisch verbunden.

Das Endlos-Förderband ist so angeordnet, dass sich zu transportierende Gegenstände auf das Förderband legen lassen und vom Förderband nehmen lassen.

Jede Erhebung hat die Form eines Höckers, der sich aus der Förderband-Ebene erhebt. Jede Erhebung ist so hoch, dass sich ein auf der Erhebung liegender Gegenstand greifen lässt. Die Erhebungen ermöglichen es, dass manuell zwischen einem auf mindestens einer Erhebung liegenden Gegenstand und das Förderband gefasst wird.

Die Erhebungen sind so hoch, dass ein Werker zwischen einen Gegenstand, der auf mindestens einer Erhebung liegt, und das Förderband greifen kann. Die Erhebungen in Form von Höckern müssen daher höher sein als diejenigen, die in DE 2138621 A beschrieben werden und dort dazu dienen, Schlupfbandtransport zu vermeiden.

Weil die Erhebungen die Form von Höckern haben, erstreckt sich um jede Erhebung ein ebener Bereich des Förderbands. Dadurch wird es ermöglicht, von jeder Richtung aus manuell zuzugreifen und einen Gegenstand vom Förderband zu nehmen. Man kann Gegenstände auch von einem Handhabungsautomaten greifen lassen, ein solcher Automat ist aber dank der Erfindung nicht erforderlich.

Weil die Erhebungen mechanisch mit dem Förderband verbunden sind, wird ein Mechanismus eingespart, der diese Erhebungen relativ zum Förderband bewegt, z. B. in eine Richtung senkrecht zur Förderband-Ebene und z. B. so wie in EP 1819994 B1 beschrieben. Ein solcher Mechanismus ist aufwendiger und erfordert mehr Wartung als die lösungsgemäßen Erhebungen. Die lösungsgemäße Vorrichtung ist somit mechanisch einfach aufgebaut.

Die lösungsgemäße Vorrichtung ermöglicht es, ein durchgehendes Förderband ohne Aussparungen zu verwenden. Die Notwendigkeit wird eingespart, das Förderband aus mehreren Streifen zusammenzusetzen, so wie dies in EP 1819994 B1 beschrieben ist. Ein durchgehendes Förderband ohne Aussparungen ist mechanisch robuster und belastbarer und vermag schwerere Gegenstände zu tragen.

Jede Erhebung hat einen abgerundeten Kopf. Die Erhebungen erstrecken sich senkrecht zur Ebene des Förderbands. Die Abrundungen des Kopfes werden bei Betrachtung aus einer Richtung parallel zu dieser Ebene sichtbar. Die Erhebungen haben also keine scharfen Kanten. In einer Betrachtungsrichtung senkrecht zur Ebene hat jede Erhebung eine Umrisslinie, die z. B. die Form eines Kreises, einer Ellipse, eines Rechtecks mit abgerundeten Ecken oder eines Parallelogramms mit abgerundeten Ecken hat. Diese Ausgestaltung mit dem abgerundeten Kopf verringert die Gefahr, dass ein Werker sich an einer Erhebung verletzt, was sonst bei einem raschen Greifen geschehen kann.

Gegenstände lassen sich besonders gut greifen und vom Förderband nehmen, wenn jede Erhebung sich - gesehen in eine Richtung vom Förderband weg - verjüngt und eine glatte Oberfläche besitzt.

Vorzugsweise hat jede Erhebung die Form eines Kegelstumpfs, auf den ein Kugelsegment ohne Knickkante aufgesetzt ist.

Die lösungsgemäße Vorrichtung lässt sich zum Transport von festen Gegenständen verwenden, auch von flachen und auch biegsamen Gegenständen, z. B. Postsendungen, Vordrucke, oder auch zum Transport von Abfällen. Die Vorrichtung ermöglicht es, die auf dem Förderband befindlichen Gegenstände dadurch zu sortieren, dass einige Gegenstände vom Förderband genommen werden und andere auf dem Förderband verbleiben. Oft ist es technisch nicht möglich oder nicht wirtschaftlich, einen Handhabungsautomaten einzusetzen. Dank der Erfindung können Menschen diese Sortierung vornehmen.

Im Folgenden wird die Erfindung anhand eines Ausführungsbeispiels beschrieben. Dabei zeigt:
- Fig. 1: die Transportvorrichtung des Ausführungsbeispiels in eine Betrachtungsrichtung senkrecht auf die Trans-portrichtung;
- Fig. 2: die Transportvorrichtung der Fig. 1 von oben.

Im Ausführungsbeispiel wird die Vorrichtung zum Transport von flachen Postsendungen eingesetzt. Jede Postsendung erstreckt sich in einer Gegenstandsebene.

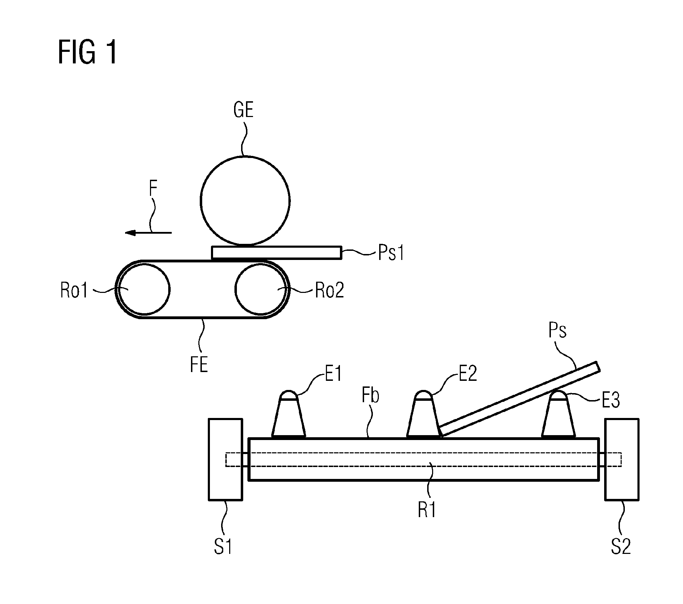

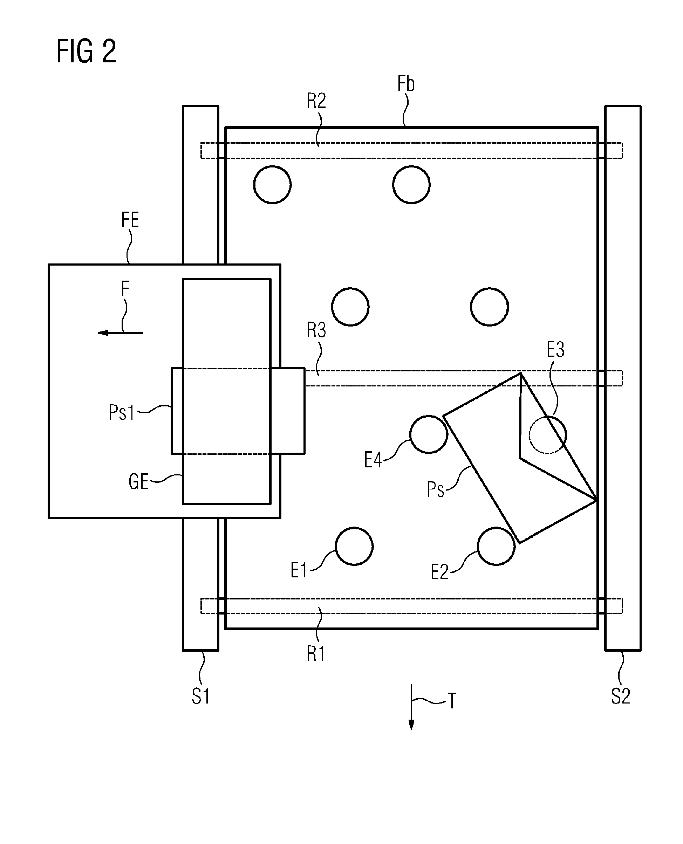

Fig. 1 zeigt die Transportvorrichtung des Ausführungsbeispiels in eine Betrachtungsrichtung senkrecht auf die Transportrichtung. Fig. 2 zeigt die Transportvorrichtung der Fig. 1 von oben.

Die Transportrichtung, in der ein Endlos-Förderband Fb der Vorrichtung Postsendungen transportiert, steht senkrecht auf der Zeichenebene von Fig. 1. Das Endlos-Förderband Fb erstreckt sich in einer Förderband-Ebene, die senkrecht auf der Zeichenebene von Fig. 1 steht und in der Zeichenebene von Fig. 2 liegt. Das Förderband Fb transportiert Postsendungen auf den Betrachter von Fig. 1 zu.

Die Vorrichtung besitzt mindestens zwei waagrechte Rollen R1, R2, um die herum das Endlos-Förderband Fb geführt ist. Jede Rolle R1, R2 ist auf eine Welle montiert. Eine Welle wird von einem Antrieb gedreht, jede andere Welle ist drehbar gelagert, so dass die auf ihr montierte Rolle R2, R3, ... als Laufrolle fungiert. In Fig. 2 ist eine weitere Rolle R3 gezeigt, die das Förderband Fb zusätzlich trägt. Die angetriebene Welle dreht die mit ihr verbundene Rolle R1. Dadurch wird das Förderband Fb in eine Transportrichtung T gedreht und dreht die Laufrollen R2, R3, ... mit. Vorzugsweise sind die mindestens zwei Rollen so angeordnet, dass das Förderband Fb horizontal angeordnet ist. Möglich ist, dass weitere Laufrollen R3, ... das Förderband Fb stützen.

In Fig. 1 und Fig. 2 werden die angetriebene Rolle R1, die Laufrollen R2 und R3 und die Transportrichtung T angedeutet.

Eine Vielzahl von flachen Postsendungen wird auf das Förderband Fb geschüttet. Die Vielzahl von Postsendungen umfasst z. B. Standardbriefe, Großbriefe, Postkarten, Päckchen, Kataloge u. ä. und stammt aus Briefkästen sowie von Postämter, Postagenturen und sonstigen Annahmestellen für Postsendungen. In Fig. 1 wird beispielhaft eine flache Postsendung Ps gezeigt.

Das Förderband Fb transportiert diese Postsendungen in die Transportrichtung T zu einer ersten Verarbeitungseinrichtung VE, in der die Postsendungen automatisch weiter verarbeitet werden, z. B. indem die Postsendungen nach Formaten getrennt werden.

Bevor aber die Postsendungen von dieser ersten Verarbeitungseinrichtung VE automatisch verarbeitet werden, muss sichergestellt werden, dass nur die maschinenfähigen Postsendungen diese erste Verarbeitungseinrichtung VE erreichen. Daher sind einige Postsendungen aus dem Strom von Postsendungen, die das Förderband Fb transportiert, zu entfernen, insbesondere
- mechanisch beschädigte Postsendungen,
- Postsendungen, die so dick oder hoch oder lang sind, dass die erste Verarbeitungseinrichtung sie nicht zu verarbeiten vermag,
- speziell verpackte Postsendungen und
- Gegenstände, die keine Postsendungen sind, z. B. Brieftaschen oder auch Abfall.

Das Förderband Fb transportiert den Strom von Postsendungen an einem Arbeitsplatz vorbei, an dem ein Werker oder ein Handhabungsautomat die nicht maschinenfähigen Postsendungen vom Förderband Fb nimmt und in einen Sammelbehälter oder eine andere geeignete Aufnahmevorrichtung verbringt. Hierfür wählt der Werker bzw. der Handhabungsautomat eine nicht maschinenfähige Postsendung, die auf dem Förderband Fb liegt, aus, greift sie, hebt sie vom Förderband Fb und transportiert sie in die Aufnahmevorrichtung.

Die flachen Postsendungen wurden auf das Förderband Fb geschüttet, welches breiter ist als die größte Abmessung jeder Postsendung. Dadurch liegt jede Postsendung flach auf dem Förderband Fb. Die lösungsgemäße Vorrichtung stellt sicher, dass sich eine Postsendung trotzdem gut und zuverlässig greifen lässt, auch dann, wenn sie groß ist oder eine glatte Oberfläche besitzt.

Die den Postsendungen zugewandte Oberfläche des Endlos-Förderbands Fb weist eine Vielzahl von kegelförmigen, kugelförmigen, zylinderförmigen oder auch quaderförmigen Erhebungen E1, E2, E3, ... auf. Jede Erhebung E1, E2, E3, ... hat die Form eines Höckers und ist fest mit dem Förderband Fb verbunden und wird mitsamt dem Förderband Fb um die Rollen R1, R2, R3 herum geführt. Hierbei zeigt die Erhebung E1, E2, E3, ... nach außen und steht senkrecht auf der Förderband-Ebene. Vorzugsweise ist jede Erhebung E1, E2, E3, ... aus einem weichen Material gefertigt, so dass weder ein Werker sich verletzen kann noch eine Postsendung beschädigt wird. In einer Ausgestaltung ist jede Erhebung E1, E2, E3, ... innen hohl, um Material und Gewicht einzusparen. Um jede Erhebung herum befindet sich ein ebener Bereich des Förderbands.

Jede Erhebung E1, E2, E3, ... besitzt bevorzugt eine glatte Oberfläche und einen abgerundeten Kopf. In einer Ausgestaltung hat jede Erhebung E1, E2, E3, ... die Form eines Kegelstumpfs, der sich nach oben verjüngt, und einen annähernd halbkugelförmigen Kopf, um die Gefahr zu verringern, dass ein Werker verletzt wird oder ein Handhabungsautomat oder eine Postsendung beschädigt werden. Vorzugsweise geht der Kegelstumpf ohne Kante in den Kopf über.

Jede Erhebung E1, E2, E3, ... ist mechanisch mit dem Förderband Fb verbunden. Vorzugsweise ist jede Erhebung E1, E2, E3, ... so mit dem Förderband Fb verbunden, dass zwischen der Erhebung E1, E2, E3, ... und dem Förderband Fb kein Spalt oder Schlitz auftritt. Dadurch wird verhindert, dass eine Postsendung in einem solchen Spalt oder Schlitz eingeklemmt wird und weder vom Werker oder Handhabungsautomaten gegriffen noch von der ersten Verarbeitungseinrichtung VE verarbeitet werden kann.

Der Abstand zwischen den Erhebungen E1, E2, E3, ... ist so gering gewählt, dass ein auf das Förderband Fb geschüttete Postsendung mindestens dann auf mindestens eine Erhebung E1, E2, E3, ... zu liegen kommt und nicht zwischen die Erhebungen E1, E2, E3, ... rutscht, wenn jede Abmessung der Postsendung in der Gegenstandsebene größer ist als eine vorgegebene untere Schranke. Vorzugsweise ist der Abstand der Erhebungen E1, E2, E3, ... andererseits so groß gewählt, dass der Werker gut mit der Hand dazwischen greifen kann.

Beispielsweise sind die Erhebungen E1, E2, E3, ... an den Kreuzungspunkten eines Gitters angebracht, und zwei benachbarte Erhebungen haben einen Abstand von 15 cm bis 20 cm zueinander. Dieses Gitter kann parallel zu der Transportrichtung T des Förderbands Fb angebracht sein oder auch schräg, d. h. dass die gedachten Kanten dieses Gitters in einem spitzen Winkel auf die Transportrichtung T des Förderbands Fb stehen. Diese Ausgestaltung wird in Fig. 2 gezeigt.

In der Regel fällt eine große Postsendung so auf das Förderband Fb, dass die Postsendung auf mindestens einer Erhebung E1, E2, E3, ... zu liegen kommt. Dies bewirkt, dass die Postsendung - gesehen in eine Betrachtungsrichtung parallel zur Transportrichtung T - schräg liegt, weil eine Ecke oder Kante direkt auf dem Förderband Fb liegt. In Fig. 2 wird beispielhaft eine Postsendung Ps gezeigt, die auf der Erhebung E3 liegt und von den Erhebungen E2, E4 daran gehindert wird, von der Erhebung E3 zu rutschen.

Möglich ist auch, dass eine Postsendung ausschließlich auf Erhebungen E1, E2, E3, ... liegt und nicht mit dem Förderband Fb in Berührung kommt.

Jede Erhebung E1, E2, E3, ... ist so hoch, dass der Werker oder Handhabungsautomat eine auf der Erhebung E1, E2, E3, ... liegende Postsendung einfach und schnell greifen kann und dabei zwischen die Postsendung und das Förderband Fb fassen kann. Daher ist jede Erhebung E1, E2, E3, ... mindestens 4 cm, vorzugsweise mindestens 6 cm hoch. Der Werker bracht dank der Erhebungen E1, E2, E3, ... keine Sicherheitshandschuhe zu tragen. Eine Beschädigung des Förderbands Fb durch eine Greifhand eines Handhabungsautomaten wird ebenfalls vermieden. Möglich ist, dass mehrere Postsendungen übereinander liegen und eine dieser übereinander liegenden Postsendungen als nicht maschinenfähig vom Förderband Fb zu entnehmen ist und eine andere auf dem Förderband Fb verbleiben soll. In alle Regel liegen diese Postsendungen dank der Erhebungen E1, E2, E3, ... nicht parallel zueinander auf dem Förderband Fb. Vielmehr beschreiben ihre Gegenstandsebenen Winkel zueinander, so dass die Postsendungen quasi verkantet sind und sich die nicht maschinenfähige Postsendung leicht greifen lässt und entfernen lässt.

Das Endlos-Förderband Fb wird zwischen zwei seitlichen Begrenzungselementen S1, S2 hindurch transportiert. Diese seitlichen Begrenzungselemente S1, S2 haben z. B. die Form von Leitplanken. Diese Begrenzungselemente S1, S2 verhindern, dass eine Postsendung vom Förderband Fb fällt. Die Wellen, auf denen die Rollen R1, R2, R3 montiert sind, um die das Förderband Fb herum geführt ist, sind in einer Ausgestaltung in die seitlichen Begrenzungselemente S1, S2 eingelassen.

In einer Ausführungsform verbringt der Werker bzw. der Handhabungsautomat eine nicht maschinenfähige Postsendung direkt in die Aufnahmevorrichtung, z. B. in einen Sammelbehälter, für auszusortierende Postsendungen. In einer anderen Ausführungsform weist die Vorrichtung eine Abtransporteinrichtung AE auf. Diese Abtransporteinrichtung AE transportiert die Postsendung zu diesem Sammelbehälter. Der Werker bzw. der Handhabungsautomat verbringt die Postsendung Ps1 vom Förderband Fb zur Abtransporteinrichtung AE.

Im Beispiel der Fig. 1 und Fig. 2 transportiert die Abtransporteinrichtung AE eine nicht maschinenfähige Postsendung Ps1 ab.

Die Abtransporteinrichtung AE besitzt ein Förderelement FE und ein Gegenförderelement GE. Das Förderelement FE ist angetrieben und ist vorzugsweise als Endlos-Förderband Fb ausgestaltet. Das Gegenförderelement GE ist z. B. ebenfalls ein Endlos-Förderband oder ein sich drehender Zylinder oder eine Rolle oder auch nur eine glatte Fläche. Das Förderelement FE und das Gegenförderelement GE sind so angeordnet, dass zwischen ihnen ein Schlitz Schl entsteht und die beiden Elemente FE, GE eine Postsendung Ps1 zeitweise zwischen sich einzuklemmen und in eine Förderrichtung F zu transportieren vermögen. Beispielsweise drehen sich das angetriebene Förderelement FE und das Gegenförderelement GE mit gleicher Geschwindigkeit. Das Förderelement FE besitzt eine raue Oberfläche und ist vorzugsweise aus einem elastischen Material gefertigt. Die Förderrichtung F der Abtransporteinrichtung AE steht beispielsweise senkrecht auf der Transportrichtung T des Förderbands Fb.

Im Beispiel der Fig. 1 ist das Förderelement FE als Endlos-Förderband ausgestaltet, das um zwei Rollen Ro1 Ro2 herum geführt ist. Das Gegen-Förderelement GE ist ein Zylinder, der um eine Drehachse drehbar ist, die senkrecht auf der Förderrichtung F der Abtransporteinrichtung AE steht.

Der Werker bzw. der Handhabungsautomat steckt die nicht maschinenfähige und daher auszusortierende Postsendung Ps1 in den Schlitz Schl zwischen dem Förderelement FE und dem Gegen-förderelement GE. Die Abtransporteinrichtung AE fasst die Postsendung Ps1 und zieht sie durch den Schlitz Schl hindurch ein. Das Förderelement FE und das Gegenförderelement GE transportieren die Postsendung in eine Förderrichtung F bis zu einer Rutsche. Die Postsendung Ps1 rutscht über die Rutsche in den Sammelbehälter.

Vorzugsweise ist das Gegen-Förderelement GE so angebracht, dass es sich senkrecht zur Förderrichtung F bewegen lässt. Dadurch lässt sich der Schlitz Schl an unterschiedlich dicke Postsendungen anpassen. Beispielsweise drückt eine dicke Postsendung Ps1 das Gegen-Förderelement GE gegen die Kraft einer Feder nach oben. Umgekehrt drückt die Feder das Gegen-Förderelement GE gegen die abzutransportierende Postsendung, so dass auch eine dünne Postsendung sicher gefasst wird.

### Bezugszeichenliste

| *Bezugszeichen* | *Bedeutung* |
|---|---|
| AE | Abtransporteinrichtung |
| E1, E2, E3 | Erhebungen auf der Oberfläche des Förderbands Fb |
| Fb | Endlos-Förderband |
| FE | Förderelement der Abtransporteinrichtung AE |
| GE | Gegen-Förderelement der Abtransporteinrichtung AE |
| Ps | Postsendung, die auf der Erhebung E3 liegt |
| Ps1 | Postsendung, die von der Abtransporteinrich-tung AE1 abtransportiert wird |
| R1 | angetriebene Rolle, um die herum das Förder-band Fb geführt ist |
| R2, R3 | Laufrollen, um die herum das Förderband Fb ge-führt ist |
| Ro1, Ro2 | Rollen, um die das Förderelement FE herum ge-führt ist |
| S1, S2 | seitliche Begrenzungselemente, zwischen denen das Förderband Fb hindurch geführt wird |
| Schl | Schlitz zwischen dem Förderelement FE und dem Gegen-Förderelement GE |
| VE | Verarbeitungseinrichtung |

## Patentansprüche

1. Vorrichtung zum Transport von Gegenständen (Ps, Ps1), wobei
- die Vorrichtung ein angetriebenes Endlos-Förderband (Fb) umfasst und
- das Förderband (Fb) sich in einer Ebene erstreckt und
- das Förderband (Fb) so angeordnet ist, dass sich zu transportierende Gegenstände auf das Förderband (Fb) legen lassen und vom Förderband (Fb) nehmen lassen, und
- das Förderband (Fb) eine Vielzahl von Erhebungen (E1, E2, ...) aufweist,
wobei jede Erhebung (E1, E2, ...)
- sich aus der Förderband-Ebene erhebt und
- mit dem Förderband (Fb) mechanisch verbunden ist, **dadurch gekennzeichnet, dass** jede Erhebung (E1, E2, ...)
- die Form eines Höckers hat,
- einen abgerundeten Kopf besitzt und
- so hoch ist, dass sich ein auf der Erhebung (E1, E2, ...) liegender Gegenstand manuell greifen lässt,
- wobei die Erhebung (E1, E2, ...) es ermöglicht, dass zwischen dem Gegenstand und das Förderband (Fb) gefasst wird.

2. Vorrichtung nach Anspruch 1,
**dadurch gekennzeichnet, dass**
jede Erhebung (E1, E2, ...) eine glatte Oberfläche besitzt.

3. Vorrichtung nach Anspruch 1 oder Anspruch 2,
**dadurch gekennzeichnet, dass**
jede Erhebung (E1, E2, ...) sich - gesehen in eine Richtung vom Förderband (Fb) weg und senkrecht zur Förderband-Ebene - verjüngt.

4. Vorrichtung nach einem der Ansprüche 1 bis 3,
**dadurch gekennzeichnet, dass**
jede Erhebung (E1, E2, ...) einen Kegelstumpf umfasst, auf den der abgerundete Kopf aufgesetzt ist.

5. Vorrichtung nach einem der Ansprüche 1 bis 4,
**dadurch gekennzeichnet, dass**
- die Vorrichtung eine Abtransporteinrichtung (AE) aufweist,
- die Abtransporteinrichtung (AE) ein sich drehendes Förderelement (FE) und ein Gegenförderelement (GE) aufweist und
- das Förderelement (FE) und das Gegenförderelement (GE) so angeordnet sind,
dass sie einen flachen Gegenstand (Ps1) zwischen sich einzuklemmen vermögen und in eine Förderrichtung (F) abzutransportieren vermögen.
